(19) Europäisches Patentamt
European Patent Office
Office européen des brevets

(11) Veröffentlichungsnummer: **0 522 357 A1**

(12) **EUROPÄISCHE PATENTANMELDUNG**

(21) Anmeldenummer: **92110699.3**

(51) Int. Cl.5: **G01M 3/10**, G01M 3/20

(22) Anmeldetag: **25.06.92**

(30) Priorität: **28.06.91 DE 4121366**

(43) Veröffentlichungstag der Anmeldung:
**13.01.93 Patentblatt 93/02**

(84) Benannte Vertragsstaaten:
**BE DE DK ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Naumann, Joachim**
**Im Schulzehnten 16**
**W-6233 Kelkheim (Taunus)(DE)**
Erfinder: **Schnauber, Martin, Dr.**
**Am Forsthaus 1**
**W-6238 Hofheim am Taunus(DE)**

(54) **Verfahren zur qualitativen und quantitativen Dichtheitsprüfung von Hohlkörpern.**

(57) Die Erfindung betrifft ein Verfahren zur Dichtheitsprüfung von verschließbaren oder verschlossenen Hohlkörpern. Wenn der zu prüfende Hohlkörper zu öffnen und dann wieder verschließbar ist, wird er mit einer niedrig siedenden Substanz, insbesondere einem Gas, gefüllt und dann verschlossen. Wenn der Hohlkörper dagegen verschlossen und nicht zu öffnen ist, wird er in einem Autoklaven bei Unter- oder Überdruck mit einer niedrig siedenden Substanz beaufschlagt. Anschließend wird er in eine heiße Flüssigkeit eingetaucht oder in die Testkammer eines Detektors gelegt. Im ersten Fall werden undichte Stellen an den eingetauchten Hohlkörpern durch Aufsteigen von Dampfblasen des Niedrigsieders bzw. durch Gasblasen qualitativ festgestellt. Im zweiten Fall wird die Leckrate z.B. durch Spektroskopie im infraroten Bereich quantitativ ermittelt.

Als Badflüssigkeit wird ein Perfluorpolyether, ein perluoriertes Amin oder ein perfluorierter Aminoether verwendet.

Als niedrigsiedende Substanz werden u.a. chlorierte und/oder fluorierte Alkane oder Alkene verwendet.

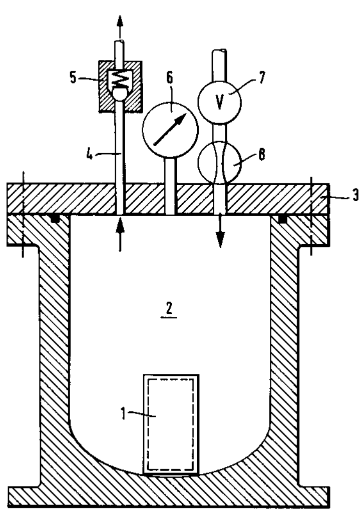


Fig. 1

EP 0 522 357 A1

Die vorliegende Erfindung betrifft ein Verfahren zur Dichtheitsprüfung von verschließbaren oder verschlossenen Hohlkörpern. Wenn der zu prüfende Hohlkörper zu Öffnen und dann wieder verschließbar ist, wird er mit einer niedrig siedenden Substanz, insbesondere einem Gas, gefüllt und dann verschlossen. Wenn der Hohlkörper dagegen verschlossen und nicht zu öffnen ist, wird er in einem Autoklaven bei Unter- oder Überdruck mit einer niedrig siedenden Substanz beaufschlagt. Anschließend wird er entweder in eine heiße Flüssigkeit eingetaucht oder in die Testkammer eines Detektors gelegt. Im ersten Fall werden undichte Stellen an den eingetauchten Hohlkörpern durch Aufsteigen von Dampfblasen des Niedrigsieders bzw. durch Gasblasen qualitativ festgestellt. Im zweiten Fall wird die Leckrate z.B. durch Spektroskopie im infraroten Bereich quantitativ ermittelt.

Bei der Qualitätskontrolle und Qualitätssicherung von Hohlkörpern, wie Gehäusen oder Behältern, ist es häufig notwendig, deren Porosität oder die Dichtheit von deren Verschlüssen, Schweißnähten oder geklebten Stellen zu prüfen. Dazu bedient man sich verschiedener Methoden.

Eine dieser Methoden ist der Helium-Feinlecktest. Dabei dringt Heliumgas bei Überdruck durch undichte Stellen in den Hohlkörper ein. Die anschließend beim Anlegen von Vakuum austretende Heliummenge wird mit einem Massenspektrometer quantitativ erfaßt. Diese Prüfmethode ist jedoch apparativ aufwendig, wegen des Verbrauchs an Helium relativ teuer und in vielen Fällen zu empfindlich.

Bei der Blasen-Prüfmethode mit wäßriger Tensidlösung werden die Hohlkörper mit komprimierter Luft beaufschlagt und von außen mit einer wäßrigen Tensidlösung bestrichen oder ganz in eine solche Lösung eingetaucht. Der Nachteil dieses Verfahrens ist, daß Metalle dabei korrodieren können, daß die Prüflinge danach gespült und getrocknet werden müssen, daß Teile mit öliger Oberfläche schlecht benetzen, daß das Eintauchbad ständig erneuert werden muß und daß die Leckrate schwer zu definieren ist. Ersetzt man die wäßrige Tensidlösung durch ein Öl, muß dieses Öl danach durch Entfettung mit einem organischen Lösemittel wieder entfernt werden. Außerdem werden z.T. Kunststoffe bei einer solchen Prozedur von dem Öl angegriffen, und es besteht durch das Öl und bei der Entfettung mit brennbaren Lösemitteln Brandgefahr. Das gleiche gilt, wenn anstelle des Öls ein Glykol verwendet wird.

Man kann zur Dichtheitsprüfung die Hohlkörper mit einem flüssigen Kohlenwasserstoff oder Chlorkohlenwasserstoff füllen, anschließend leicht erwärmen und die aus undichten Stellen austretenden Dämpfe der eingefüllten Flüssigkeit mit einem IR-Gasanalysator bzw. Halogen-Lecksucher quantitativ bestimmen. Doch diese Verfahren sind im ersten Fall wegen der Brandgefahr und im zweiten Fall wegen der Umweltbelastung nicht zu empfehlen.

Nach einem Verfahren, das in der DE-OS 3 803 718 beschrieben wird, werden Hohlkörper mit einer Farbstofflösung befüllt. Es werden dabei organische fluoreszierende, z.T. Tenside enthaltende Farbstoffe eingesetzt. Die Oberfläche der Hohlkörper wird einer Bestrahlung, insbesondere einer UV-Bestrahlung, ausgesetzt und die undichten Stellen z.B. durch optisch-manuelle Beobachtung festgestellt. Eine solche Prüfmethode kann nur in einem abgedunkelten Raum durchgeführt werden. Ihre Auswertung ist rein subjektiv. Die Farbstoffreste müssen durch Reinigung von den Prüflingen wieder entfernt werden.

In der DE-OS 3 739 166 wird ein Leckprüfgerät für offene Hohlteile beschrieben. Der mit komprimierter Luft beaufschlagte Prüfling wird in eine Flüssigkeit, z.B. Wasser, eingetaucht. Durch eine Meßeinrichtung wird die Menge der aufsteigenden Luftblasen bestimmt und auf diese Weise die Dichtheit des Hohlteils geprüft. Dieses Leckprüfgerät eignet sich nur für bestimmte Arten von Hohlkörpern, beispielsweise für Rohre und offene Zylinder. Außerdem werden als Leckteststoffe nur Luft und Wasser erwähnt. Welche Leckraten damit gemessen werden können, wird ebenfalls nicht erwähnt.

Der vorliegenden Erfindung liegt nun die Aufgabe zugrunde, ein Verfahren zu finden, das die Nachteile der genannten Dichtheitsprüfmethoden vermeidet. Es wurde gefunden, daß ein Verfahren, das in der elektronischen Industrie zur Dichtheitsprüfung von Hohlkörpern angewendet wird, sich zu einer universell einsetzbaren Prüfmethode weiterentwickeln läßt. Dieses Verfahren wird in "Military Standard Test Methods and Procedures for Microelectronics (MIL-STD-883C, Notice 8, Method 1014.9 "Seal", Test Condition C, 22.3.1989) of US-Department of Defense" beschrieben. Dabei werden die Prüflinge in einen Autoklaven gelegt und dieser evakuiert. In den Autoklaven wird ein flüssiger perfluorierter Kohlenwasserstoff mit einem Siedepunkt zwischen + 50 °C und + 95 °C injiziert. Die Dämpfe der eingespritzen Flüssigkeit umhüllen die Prüflinge und dringen durch undichte Stellen in das Innere der Gehäuse ein. Durch die Injektion des Niedrigsieders wird der Unterdruck im Autoklaven abgebaut. Die Verweildauer der Prüflinge im Autoklaven hängt ab von der Druckhöhe und von der Art der weiteren Behandlung. Zunächst werden die Prüflinge nach Druckausgleich aus dem Autoklaven herausgenommen. Anschließend werden sie in ein auf 125 ± 5 °C erwärmtes Bad eines perfluorierten Kohlenwasserstoffs mit einem Siedepunkt zwischen + 140 °C und 200 °C eingetaucht. Undichte Stellen an den eingetauchten Gehäusen werden dadurch erkennbar, daß Dampfblasen des Niedrigsieders in der höher siedenden Badflüssigkeit aufsteigen. Mit "Test Condition $C_1$" soll unter definierten Prüfbedingungen die erforderliche Empfindlichkeit dieses Verfahrens sichergestellt werden.

Die Lecks können so qualitativ bewertet werden. Bei "Condition $C_3$" wird zusätzlich die Leckrate von undichten Gehäusen durch Messen der ausgetretenen Dampfmengen des Niedrigsieders quantitativ erfaßt.

Das geschilderte Verfahren beschränkt sich jedoch auf die Dichtheitsprüfung von verschlossenen Bauteilen und Gehäusen aus der elektronischen Industrie. Es mußte nun geprüft werden, welche Kriterien bei der Entwicklung eines universell einsetzbaren Dichtheitsprüfverfahrens für Hohlkörper beachtet werden müssen.

Untersuchungen über die Anwendbarkeit und Empfindlichkeit der Blasentestmethode wurden bereits veröffenlicht. Die Veröffentlichung "Vacuum, Bubble Tests for Gas Tightness" (in VACUUM Vol. 14, S. 221-226) geht nur auf die Anwendung von Methanol und Ethanol als Badflüssigkeit ein und beschränkt sich ansonsten auf theoretische Erörterungen über den Einfluß der Oberflächenspannung, der Viskosität und des Molekulargewichtes der Leckteststoffe und des angewendeten Testdruckes auf das Ergebnis, macht aber keine Angaben, welche spezifischen Gase für das Verfahren geeignet sind. In dem "Nondestructive Testing Handbook" (Ausgabe 1982), herausgegeben von R.C. McMaster, werden im Teil 2 "Elementary Theory of Bubble Emission Leak Testing by the liquid Immersion Technique" neben theoretischen Überlegungen auch Vergleiche zwischen verschiedenen Testflüssigkeiten und Testgasen angestellt. Fluorierte Kohlenwasserstoffe werden als Testflüssigkeit für das Tauchbad erwähnt.

Es wurde überraschenderweise gefunden, daß bestimmte andere perfluorierte Inertflüssigkeiten für das Tauchbad bestens geeignet sind. Ein Gegenstand der Erfindung ist ein Verfahren zur Prüfung der Dichtheit von verschließbaren Hohlkörpern in einem eine Badflüssigkeit enthaltenden Gefäß, bestehend aus folgenden Schritten

a) Befüllen des Hohlkörpers mit einer niedrig siedenden Substanz und dann Verschließen,

b) Eintauchen des befüllten Hohlkörpers in die Badflüssigkeit, die eine höhere Temperatur hat als der Hohlkörper,

c) Beobachten, ob aus undichten Stellen des Hohlkörpers Blasen austreten,

wobei die in den Hohlkörper eingefüllte Substanz einen niedrigeren Siedepunkt hat als die Badflüssigkeit, dadurch gekennzeichnet, daß man als Badflüssigkeit einen Perfluorpolyether, ein perfluoriertes tertiäres Amin oder einen perfluorierten Aminoether verwendet.

Bevorzugt sind unter den Perfluorpolyethern:

1) Perfluorpolyether der Formel (I)

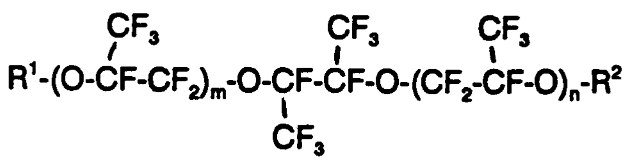

(I)

worin bedeuten:

$R^1$, $R^2$ gleich oder voneinander verschieden F oder $C_aF_{2a+1}$ , wobei a eine ganze Zahl von 1 bis 10 ist und

m, n ganze Zahlen von 0 bis 12 mit $1 \leqq n+m \leqq 15$

und

2) Perfluorpolyether der Formel (II)

$R^3$-O-(A)-(B)-(C)-$R^4$ (II)

worin bedeuten:

$R^3$, $R^4$ gleich oder voneinander verschieden $C_bF_{2b+1}$ , wobei b eine ganze Zahl von 1 bis 4 ist,

(A), (B) und (C) verschieden voneinander eine Gruppe der Formel

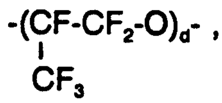

$-(C_2F_4-O)_e-$ oder

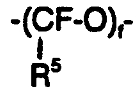

mit

$R^5$ = F oder $CF_3$,

d eine ganze Zahl von 1 bis 7,

e, f gleich oder voneinander verschieden eine ganze Zahl von 0 bis 7.

Die Herstellung von Perfluorpolyethern der Formel (I) und (II) ist z.B. in US-PS 3 665 041, US-PS 3 985 810 und in JP-OS Sho-58-103 334 beschrieben.

Besonders geeignet sind folgende Perfluorpolyether der Formel (I):
Perfluor-5,6-dimethyl-4,7-dioxadecan mit einem Siedepunkt von 130 °C (®Hostinert 130),
Perfluor-5,6,9-trimethyl-4,7,10-trioxatridekan mit einem Siedepunkt von 175 °C (®Hostinert 175),
Perfluor-5,8,9,12-tetramethyl-4,7,10,13-tetraoxahexadekan mit einem Siedepunkt von 216 °C (®Hostinert 216),
Perfluor-5,8,9,12,15-pentamethyl-4,7,10,13,16-pentaoxanonadekan mit einem Siedepunkt von 245 °C (®Hostinert 245),
Perfluor-5,8,11,12,15,18-hexamethyl-4,7,10,13,16,19-hexaoxadocosan mit einem Siedepunkt von 272 °C (®Hostinert 272),
Perfluor-5,8,11,14,15,18,21,24-octamethyl-4,7,10,13,16,19,22,25-octaoxaoctacosan mit einem Siedepunkt von 316 °C (®Hostinert 316).
Sehr geeignet ist auch ein Gemisch aus Perfluorpolyethern nach Formel (II), in deren Strukturformeln $R^3$ und $R^4$ = $CF_3$, d etwa 40, d:f = 5:1 bis 20:1 und e = 0 ist, mit einem Siedepunktvon ca. 215 °C.

Unter den perfluorierten tertiären Aminen sind bevorzugt solche der Formel $R^6R^7R^8N$, worin $R^6$ bis $R^8$ gleich oder voneinander verschieden eine Gruppe der Formel $C_gF_{2g+1}$ bedeuten, wobei g eine ganze Zahl von 1 bis 14 ist.

Die Herstellung der perfluorierten Amine ist z.B. in US-PS 2 616 927, DE-OS 3 804 473 und in EP-A-0 271 272 beschrieben.

Besonders geeignet sind die Perfluortrialkylamine der Formel $C_5F_{11}N(C_2F_5)_2$ (Siedepunkt 215 °C) und $C_{10}F_{21}N(C_2F_5)_2$ (Siedepunkt 238 °C).

Unter den perfluorierten Aminoethern sind bevorzugt solche der Formel

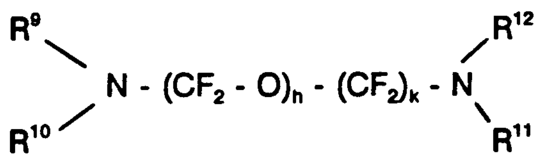

worin bedeuten:

$R^9$ bis $R^{12}$ gleich oder voneinander verschieden eine Gruppe der Formel $C_gF_{2g+1}$, wobei g eine ganze Zahl von 1 bis 14 ist,

h, k gleich oder voneinander verschieden eine ganze Zahl von 1 bis 6.

Die Herstellung der Perfluoraminoether ist z.B. in EP-A-0 214 852 beschrieben.

Besonders geeignete Perfluoraminoether sind
$(C_2F_5)_2N-CF_2CF_2OCF_2CF_2-N(C_3F_7)_2$ mit einem Siedebereich zwischen 195 und 200 °C,
$(C_2F_5)_2N-CF_2CF_2OCF_2CF_2-N(C_4F_9)_2$ mit einem Siedebereich zwischen 215 und 230 °C,
$(C_3F_7)_2N-CF_2CF_2OCF_2CF_2-N(C_3F_7)_2$ mit einem Siedebereich zwischen 225 und 240 °C,
$(C_3F_7)_2N-(CF_2)_4O(CF_2)_4-N(C_3F_7)_2$ mit einem Siedebereich zwischen 240 und 260 °C und
$(C_3F_7)_2N-(CF_2)_3O(CF_2)_3-N(C_3F_7)_2$ mit einem Siedebereich zwischen 240 und 265 °C.

Aufgrund der niedrigen Oberflächenspannungen der erfindungsgemäß eingesetzten Badflüssigkeiten werden die Prüflinge schnell benetzt. Der Zusatz von teuren Netzmitteln erübrigt sich daher. Selbst relativ hochsiedende unter diesen Flüssigkeiten verdunsten leicht und können durch Kondensation wieder zurückgewonnen werden. Es ist also nicht notwendig, Flüssigkeitsrückstände nachträglich zu entfernen. Die Badflüssigkeiten haben, außer gegenüber Fluorpolymeren, ein schlechtes Löse- und Quellvermögen, so daß die meisten Kunststoffe darin geprüft werden können. Sie greifen weder Metalle noch Glas an und sind

wegen ihres inerten Verhaltens auch als physiologisch günstig zu beurteilen.

Von den erwähnten perfluorierten Badflüssigkeiten hat sich bei einer Anwendungstemperatur von 50 °C der Perfluorpolyether Perfluor-5,8,9,12-tetramethyl-4,7,10,13-tetraoxahexadekan (®Hostinert 216) am besten bewährt, bei dem die aufsteigenden Gas- bzw. Dampfblasen des Niedrigsieders besonders gut erkennbar sind. Der Begriff Niedrigsieder soll auch Verbindungen umfassen, die bei Zimmertemperatur bereits als Gase vorliegen, insbesondere Luft. Geeignete Niedrigsieder zum Beaufschlagen bzw. Befüllen der zu prüfenden Hohlkörper sind neben Luft vor allem unbrennbare organische Halogenverbindungen mit einem Siedepunkt zwischen -30 °C und + 100 °C und einer molaren Masse zwischen 100 und 400 g/mol, vorzugsweise folgende:

1. Ganz oder teilweise chlorierte und/oder fluorierte Alkane mit 1 bis 3 C-Atomen, beispielsweise
Trichlorfluormethan mit einem Siedepunkt von 23,8 °C und einer molaren Masse von 137,4 g/mol,
1,1,2-Trichlor-1,2,2-trifluorethan mit einem Siedepunkt von 47,6 °C und einer molaren Masse von 187,4 g/mol,
1,1-Dichlor-2,2,2-trifluorethan mit einem Siedepunkt von 27,6 °C und einer molaren Masse von 152,9 g/mol oder
1,1,1,2-Tetrafluorethan mit einem Siedepunkt von -26,5 °C und einer molaren Masse von 102,03 g/mol.

2. Geradkettige oder verzweigte, ganz oder teilweise fluorierte Alkane mit 4 bis 6 C-Atomen, beispielsweise
Perfluorpentan mit einem Siedepunkt von 30 °C und einer molaren Masse von 288 g/mol,
Perfluor-n-hexan mit einem Siedepunkt von 56 °C und einer molaren Masse von 338 g/mol und seine Isomeren,
Perfluor-2-methylpentan mit einem Siedepunkt von 58 °C und einer molaren Masse von 338 g/mol,
1H-Perfluorhexan mit einem Siedepunkt von 70 °C und einer molaren Masse von 320 g/mol.

3. Geradkettige oder verzweigte, ganz oder teilweise fluorierte Alkene mit 2 bis 6 C-Atomen, beispielsweise Perfluor-n-hexen und dessen Isomere mit einem Siedepunkt zwischen 48 °C und 54 C und einer molaren Masse von 300 g/mol.

Von den eben als Niedrigsieder genannten Halogenverbindungen haben sich die unter 2. erwähnten vollfluorierten, geradkettigen oder verzweigten Perfluorhexane mit einem Siedepunkt zwischen 56 °C und 58 °C und einer molaren Masse von 338 g/mol überraschenderweise am besten bewährt. Sie sind den unter 1. erwähnten chlorhaltigen Halogenverbindungen auch deswegen vorzuziehen, weil sie - wie auch die hochsiedenden perfluorierten Badflüssigkeiten im Gegensatz zu den chlorhaltigen Verbindungen die Ozonschicht in der Stratosphäre nicht angreifen. Außerdem sind sie gegenüber Metallen, Glas und Kunststoffen (mit Ausnahme von Fluorpolymeren) ebenso inert wie die genannten Badflüssigkeiten und haben ebenso gute physiologische Eigenschaften. Ein weiterer Vorteil der perfluorierten organischen Verbindungen ist ihre außerordentlich hohe elektrische Durchschlagfestigkeit (> 50 KV, gemessen nach VDE 0303, Teil 2/DIN 53481). Das ist von Bedeutung, wenn die Leckteststoffe mit Teilen in Berührung kommen, die Elektrizität leiten.

Aufgrund der großen Siedepunktsunterschiede lassen sich die Badflüssigkeiten von den Niedrigsiedern nach einer Rückgewinnung durch Kondensation leicht destillativ trennen.

Das bisher geschilderte Verfahren bezog sich auf Hohlkörper, die geöffnet, mit einer niedrigsiedenden Substanz gefüllt und dann wieder verschlossen werden können; sie wurden daher als "verschließbare Hohlkörper" bezeichnet.

Bei Hohlkörpern, die nicht ohne Schaden geöffnet werden können - im folgenden als "verschlossene Hohlkörper" bezeichnet - muß man etwas anders vorgehen: solche Hohlkörper werden in einer Vakuum - oder Druckkammer (beides im folgenden auch als "Autoklav" bezeichnet) dem Gas oder Dampf einer niedrigsiedenden Substanz bei Unterdruck oder Überdruck ausgesetzt, d.h. mit diesem Gas oder Dampf "beaufschlagt". Falls ein Hohlkörper undicht ist, dringt das Gas oder der Dampf in den Hohlkörper ein, und nach Eintauchen des Hohlkörpers in die heiße Badflüssigkeit treten Blasen des Gases oder Dampfes aus.

Ein weiterer Gegenstand der Erfindung ist demgemäß ein Verfahren zur Prüfung der Dichtheit von verschlossenen Hohlkörpern, außer elektronischen Bauteilen, in einem eine Badflüssigkeit enthaltenden Gefäß, bestehend aus folgenden Schritten

a) Beaufschlagen des Hohlkörpers mit einer niedrigsiedenden Substanz in einer Vakuum- oder Druckkammer,

b) Eintauchen des Hohlkörpers in die Badflüssigkeit, die eine höhere Temperatur hat als der Hohlkörper,

c) Beobachten, ob aus undichten Stellen des Hohlkörpers Blasen austreten

wobei die zur Beaufschlagung des Hohlkörpers verwendete Substanz einen niedrigeren Siedepunkt hat als die Badflüssigkeit, dadurch gekennzeichnet, daß man als Badflüssigkeit einen Perfluorpolyether, ein perfluoriertes tertiäres Amin oder einen perfluorierten Aminoether verwendet.

Als Badflüssigkeiten und als niedrigsiedende Substanzen sind natürlich wieder dieselben Verbindungen geeignet und bevorzugt wie im Falle der verschließbaren Hohlkörper.

Die beiden bisher genannten Verfahren bezogen sich auf die qualitative Prüfung der Dichtheit von verschließbaren oder verschlossenen Hohlkörpern, bei der die Hohlkörper in eine heiße Badflüssigkeit getaucht werden und dann beobachtet wird, ob aus undichten Stellen des Hohlkörpers Blasen austreten.

Zur quantitativen Prüfung der Dichtheit der genannten Hohlkörper werden diese statt in einer Badflüssigkeit in einer Testkammer erwärmt und die Leckrate der niedrigsiedenden Substanz mit einem Detektor, z.B. einem Gaschromatographen, Massenspektrometer oder Infrarot-(IR)-Gasanalysator, vorzugsweise einem IR-Gasanalysator ermittelt. Vorher werden, wie bei der qualitativen Prüfung, die verschließbaren Hohlkörper mit einem Niedrigsieder befüllt und die verschlossenen bei Unterdruck oder Überdruck mit dem Niedrigsieder beaufschlagt. Als Niedrigsieder werden bei der quantitativen Prüfung jedoch nur bestimmte halogenierte Alkane oder Alkene eingesetzt.

Ein weiterer Gegenstand der Erfindung ist demgemäß ein Verfahren zur quantitativen Prüfung der Dichtheit von verschließbaren Hohlkörpern, bestehend aus folgenden Schritten

a) Befüllen des Hohlkörpers mit einer niedrigsiedenden Substanz und dann Verschließen,

b) Erwärmung des Hohlkörpers in einer Testkammer,

c) Ermittlung der Leckrate der niedrigsiedenden Substanz mit einem Detektor,

dadurch gekennzeichnet, daß man als niedrigsiedende Substanz ein ganz oder teilweise chloriertes und/oder fluoriertes Alkan mit 1 bis 3 C-Atomen, ein ganz oder teilweise fluoriertes Alkan mit 4 bis 6 C-Atomen oder ein ganz oder teilweise fluoriertes Alken mit 2 bis 6 C-Atomen verwendet.

Ganz analog verläuft die quantitative Prüfung auf Dichtheit bei verschlossenen (nicht ohne Schaden zu öffnenden) Hohlkörpern, außer elektronischen Bauteilen, nur daß statt des Befüllens des Hohlkörpers in Schritt a) wieder seine Beaufschlagung mit den genannten Niedrigsiedern in einer Vakuum- oder Druckkammer vorgenommen wird. Dies ist ein weiterer Gegenstand der Erfindung.

Zur Befüllung von Hohlkörpern, die sich öffnen und dann wieder verschließen lassen, wird ein geeigneter Niedrigsieder der oben angegebenen Art eingegossen, beispielsweise im Volumenverhältnis von etwa 1:100. Oder es wird Luft oder ein anderes Gas im Hohlkörper als Leckteststoff verwendet, wobei die Hohlkörper auch schon von Natur aus mit Luft gefüllt sein können und daher nicht eigens befüllt werden müssen. Vor der qualitativen oder quantitativen Prüfung muß der Hohlkörper wieder verschlossen werden.

Eine geeignete Methode zur Beaufschlagung von verschlossenen Hohlkörpern läuft folgendermaßen ab (Figur 1): Zunächst wird die Luft in dem Hohlkörper (1) durch Evakuieren in einem Autoklaven zumindest teilweise entfernt. Dazu wird der Hohlkörper (1) nach Öffnen des aufgeflanschten Deckels (3) in den Hohlraum (2) des Autoklaven gelegt. Nach Schließen des Deckels (3) wird die Luft über die Vakuumleitung (4) und das geöffnete Rückschlagventil (5) aus dem Autoklaven abgesaugt. Es entsteht ein Unterdruck zwischen 10 und 20 mbar, der am Manometer (6) abgelesen werden kann. In den Autoklaven wird dann (beispielsweise im Volumenverhältnis 1:5000) ein Gas oder ein flüssiger Niedrigsieder, vorzugsweise Perfluor-n-hexan oder eines seiner Isomeren, über das geöffnete Absperrventil (7) durch den Injektor (8) eingeführt. Dadurch wird der Unterdruck im Autoklaven abgebaut. Dämpfe des Niedrigsieders dringen durch undichte Stellen -falls vorhanden - in den Hohlkörper (1) ein. Nach dem Druckausgleich des Autoklaven wird der Hohlkörper über den geöffneten Deckel (3) wieder herausgenommen. Ähnlich kann man den Hohlkörper statt bei Unterdruck auch bei Überdruck mit dem Niedrigsieder, insbesondere Gas, beaufschlagen.

Eine geeignete Methode und Vorrichtung zur qualitativen (oder halb-quantitativen) Dichtheitsprüfung in einem eine heiße Badflüssigkeit enthaltenden Gefäß wird durch Figur 2 erläutert. Dabei wird der Hohlkörper (9) in einen Korb (10) mit Henkel gelegt und mit diesem in ein Heißbad (11), das sich in einer mit einer Außenlampe (12) beleuchteten, durchsichtigen Kammer (13) befindet, eingetaucht. Zur Vermeidung von Verdunstungsverlusten der Leckteststoffe wird die Kammer (13) mit einem Deckel (14) verschlossen. Das Heißbad (11) besteht aus der hochsiedenden, perfluorierten Badflüssigkeit, vorzugsweise ®Hostinert 216, und wird vorzugsweise auf einer Temperatur von etwa 50 °C gehalten. Das Heißbad (11) wird mit einem elektrischen Heizstab (15) über eine Metallbodenplatte (16) beheizt. Ist der Hohlkörper (9) undicht, steigen im Heißbad (11) je nach Größe des oder der Lecks laufend oder vereinzelt Blasen (17) des verdampften Niedrigsieders bzw. Gasblasen auf. Beginn und Dauer der Blasenbildung werden gemessen und außerdem die Art der Blasenbildung (wenige oder viele Blasen, vereinzelte, laufende oder sprudelnde Blasenbildung) beobachtet. Auf diese Weise kann eine halb-quantitative Aussage über die Dichtheit des geprüften Hohlkörpers ab einer Leckrate von etwa $1{,}0 \cdot 10^{-4}$ ml/s gemacht werden. Die Eintauchzeit beträgt in der Regel mindestens eine Minute. Danach wird der Korb (10) mit dem Hohlkörper (9) aus dem Heißbad (11) in den Dampfraum (18) gehoben. Dort läuft die Badflüssigkeit aufgrund ihrer geringen Oberflächenspannung und ihrer hohen Dichte schnell von dem Hohlkörper (9) ab. Die Dämpfe der Badflüssigkeit und (falls der Hohlkörper undicht war) die des Niedrigsieders werden an den Kühlschlagen (19) kondensiert und laufen

als Flüssigkeit in das Heißbad (11) zurück. Durch eine in gewissen Zeitabständen extern durchgeführte Destillation des Heißbades kann der in der Badflüssigkeit (Hochsieder) angesammelte Niedrigsieder wieder zurückgewonnen werden. Nach etwa einer Minute Verweilzeit kann der mittlerweile getrocknete Hohlkörper aus dem Dampfraum der Blasentestkammer durch den geöffneten Deckel (14) herausgenommen werden. Da sich auf dem Hohlkörper keine wesentlichen Rückstände von Hoch- und Niedrigsieder mehr befinden, kann er ohne Nachbehandlung weiterbearbeitet werden.

Eine geeignete Methode zur quantitativen Bestimmung der Leckrate von Hohlkörpern benutzt zur mengenmäßigen Erfassung der Niedrigsiederdämpfe einen handelsüblichen Infrarot-(IR)-Gasanalysator. Die Meßmethode des IR-Gasanalysators beruht auf dem physikalischen Prinzip, daß infrarot-aktive Dämpfe und Gase bei einer stoffspezifischen Wellenlänge Wärmestrahlung absorbieren. Der aus dieser konzentrationsabhängigen Strahlungsabsorption abgeleitete Meßeffekt ermöglicht Meßbereiche für Dampfkonzentrationen von 100 % bis zu etwa 50 ppm.

Ein Hohlkörper, dessen Leckrate mit dem IR-Gasanalysator gemessen werden soll, wird mit den oben angegebenen halogenierten Alkanen oder Alkenen entweder im Autoklaven bei Unter- oder Überdruck beaufschlagt oder, falls er sich öffnen läßt, direkt befüllt und wieder verschlossen. Anschließend wird der Hohlkörper in eine mit einem Deckel gasdicht verschließbare Kammer gelegt und auf eine Temperatur zwischen 35 °C und 150 °C erwärmt. Die Testtemperatur ist abhängig von der thermischen Beständigkeit des Materials, aus dem der Hohlkörper besteht. Die Dämpfe stömen in den bereits vorher mit halogeniertem Alkan oder Alken kalibrierten Gasanalysator und werden dort quantitativ erfaßt. Die Verweildauer des Hohlkörpers in der Kammer beträgt in der Regel, je nach Innenvolumen des Hohlkörpers, 1 bis 20 Sekunden. Aus dem meist digital angezeigten Meßwert wird die Leckrate in ml/s folgendermaßen berechnet:

Meßwert / Eichwert für 1 l Niedrigsieder • Testzeit in Sekunden

Folgende Hohlkörper können zum Beispiel erfindungsgemäß auf Dichtheit geprüft werden:

1) verschlossene, abgedichtete Verpackungsbehälter aus Glas, Metall oder Kunststoff (ausgenommen Fluorpolymere),

2) alle Hohlkörper, die gas- oder flüssigkeitsdicht sein müssen. Zum Beispiel können auf diese Weise die Dichtheit von Verschlüssen, von Schweißnähten oder von Klebeflächen oder die Oberflächenporosität von Hohlkörpern geprüft werden. Hohlkörper und Gehäuse solcher Art sind zum Beispiel geschweißte Stahlrohre aller Art, Stoßdämpfer-Behälterrohre, Hydraulikleitungen und -bauteile, Bauteile von Vakuumanlagen, Energiesparlampen, Unterdruckdosen, Kunststoffgehäuse für elektronische Bauteile, Haushaltsgeräte, Kraftfahrzeuge.

Die erfindungsgemäßen Verfahren können zu einem wichtigen Bestandteil für die Qualitätskontrolle und die Qualitätssicherung bei der Herstellung von Behältern und anderen Hohlkörpern in den verschiedensten Industriezweigen werden.

Beispiele

Beispiel 1

Folgende verschließbare Kleinbehälter und andere mit Luft bzw. verschiedenen halogenierten Niedrigsiedern gefüllte Hohlkörper wurden nach der "Blasenmethode" in Perfluor-5,8,9,12-tetramethyl-4,7,10,13-tetraoxahexadekan (®Hostinert 216) als Badflüssigkeit auf Dichtheit geprüft:

- 6 verschieden große Glasflaschen mit einem Füllvolumen von 30, 50, 100, 250, 500 bzw. 1000 ml, zunächst mit, dann ohne Deckeldichtung, aber in beiden Fällen mit fest zugedrehtem Verschluß,
- 5 verschieden große Kunststoffflaschen aus Polyethylen mit einem Füllvolumen von 50, 100, 200, 500 bzw. 1000 ml, zunächst mit fest zugedrehtem Verschluß, dann Verschlußdeckel um einen Zacken aufgedreht,
- Stahlzylinder mit einem Innenvolumen von 18,84 ml, an der offenen Seite mit einem Gummistopfen verschlossen, Stahlboden mit Durchbohrung als Prüfleck mit einem Lochdurchmesser von 0,15, 0,2 bzw. 0,3 mm.

Temperatur der Badflüssigkeit: bei Verwendung von Luft 70 °C
bei Verwendung der halogenierten Niedrigsieder 50 °C

Folgende halogenierte Niedrigsieder wurden im Volumen-Verhältnis 1:100 (bezogen auf das Innenvolumen des Hohlkörpers) in die Prüflinge eingefüllt (Umgebungstemperatur: 21 °C):

1. Trichlorfluormethan
2. 1,1,2-Trichlor-1,2,2-trifluorethan

3. 1,1-Dichlor-2,2,2-trifluorethan
4. Perfluor-2-methylpentan

Die Prüflinge wurden gemäß Figur 2 einzeln zwei Minuten lang mit dem Korb (10) in die Badflüssigkeit (11) eingetaucht. Es wurde die Zeit, nach der sich Blasen in der Badflüssigkeit entwickelten, gemessen und die Art der Blasenbildung beobachtet. Die Ergebnisse für die Hohlkörper sind in den Tabellen 1 bis 4 dargestellt. Bei den Glasflaschen mit Deckeldichtung bildeten sich je nach verwendetem Niedrigsieder mehr oder weniger Blasen. Bei Verwendung von Luft bzw. Perfluor-2-methylpentan war die Dichtheitsprüfung am empfindlichsten (Tabelle 1).

Bei den Glasflaschen ohne Deckeldichtung trat in allen Fällen eine mehr oder weniger starke Blasenbildung auf. Sie war bei Verwendung von Trichlorfluormethan bzw. von Perfluor-2-methylpentan am deutlichsten zu erkennen (Tabelle 2).

Bei den Kunststoffflaschen mit zugedrehtem Verschluß bildeten sich kaum Blasen. Mit Trichlortrifluorethan, Dichlortrifluorethan bzw. Perfluor-2-methylpentan konnte eine geringe Undichtheit bei der Flasche mit 1000 ml Innenvolumen nachgewiesen werden (Tabelle 3).

Die Blasenbildung bei den Kunststoffflaschen mit leicht aufgedrehtem Verschluß war bei Verwendung von Luft, Trichlorfluormethan bzw., bis auf eine Ausnahme, bei Verwendung von Perfluor-2-methylpentan gut erkennbar (Tabelle 4).

Bei den Stahlzylindern sprudelten mit Luft bzw. allen halogenierten Niedrigsiedern sofort am aufgebohrten Testleck, unabhängig vom Durchmesser, laufend über eine Zeitspanne von 1 Minute Blasen, besonders stark bei den größeren Lochdurchmessern von 0,2 bzw. 0,3 mm.

Gemäß diesen Versuchsergebnissen eignet sich von den geprüften Niedrigsiedern, auch im Vergleich zu Luft, Perfluor-2-methylpentan am besten für die Blasenmethode.

Beispiel 2

Folgende Kleinbehälter bzw. andere Hohlkörper wurden nach der "Blasenmethode" in verschiedenen perfluorierten organischen Verbindungen als Badflüssigkeit, mit Luft bzw. Perfluor-2-methyl-pentan gefüllt, auf Dichtheit geprüft:

- eine Glasflasche mit einem Füllvolumen von 50 ml, mit fest zugedrehtem Verschluß, aber ohne Deckeldichtung,
- eine Kunststoffflasche aus Polyethylen mit einem Füllvolumen von 50 ml, Verschluß um einen Zacken aufgedreht,
- ein Stahlzylinder mit einem Innenvolumen von 18,84 ml, an der offenen Seite mit einem Gummistopfen verschlossen, Stahlboden mit Durchbohrung als Prüfleck (Lochdurchmesser 0,15 mm).

Badflüssigkeiten:

1. Perfluor-5,6,9-trimethyl-4,7,10-trioxatridekan (®Hostinert 175) mit einer kinematischen Viskosität von 1,39 $mm^2/s$ bei 50 °C,
2. Perfluor-5,8,9,12-tetramethyl-4,7,10,13-tetraoxahexadekan (®Hostinert 216) mit einer kinematischen Viskosität von 2,27 $mm^2/s$ bei 50 °C,
3. Perfluor-5,8,11,12,15,18-hexamethyl-4,7,10,13,16,19-hexaoxadocosan (®Hostinert 272) mit einer kinematischen Viskosität von 5,27 $mm^2/s$ bei 50 °C.

| | |
|---|---|
| Temperatur der Badflüssigkeit: | 50 °C |
| Umgebungstemperatur: | 21 °C |

Die Prüflinge waren entweder mit Luft oder im Volumen-Verhältnis 1:100 (bezogen auf das Innenvolumen des Hohlkörpers) mit Perfluor-2-methylpentan gefüllt. Die Prüflinge wurden gemäß Figur 2 einzeln zwei Minuten lang mit dem Korb (10) in die Badflüssigkeit (11) eingetaucht. Es wurde der Beginn und die Dauer der Blasenbildung gemessen und die Art der Blasenbildung beobachtet. Die Ergebnisse sind in Tabelle 5 dargestellt. Mit steigender Viskosität der Badflüssigkeit nahm die Größe und die Steiggeschwindigkeit der Blasen ab (in Tabelle 5 nicht angegeben). In Hostinert 216 konnte die Blasenbildung am differenziertesten verfolgt werden. Demgemäß ist diese perfluorierte organische Verbindung bei einer Anwendungstemperatur von 50 °C als Badflüssigkeit besonders geeignet. Zwischen Luft und Perfluor-2-methylpentan konnten keine signifikanten Unterschiede in der Blasenbildung festgestellt werden.

Beispiel 3

An folgenden Hohlkörpern wurde die Leckrate quantitativ in einem IR-Gasanalysator mit Perfluorhexan-Isomeren als Niedrigsiedern bestimmt:

- eine Flasche aus Polyethylen mit einem Füllvolumen von 50 ml, Verschluß um einen Zacken aufgedreht,
- ein Stahlzylinder mit einem Innenvolumen von 18,84 ml, an der offenen Seite mit einem Gummistopfen verschlossen, Stahlboden mit Durchbohrung als Prüfleck (Lochdurchmesser 0,15 mm).

| | | |
|---|---|---|
| Eingesetzte Niedrigsieder: | 1. Perfluor-2-methylpentan | |
| | 2. Gemisch aus | 75 % Perfluor-n-hexan und<br>25 % Perfluor-isohexan |
| Umgebungstemperatur: | 21 °C | |

Die Prüflinge wurden einzeln in einen 10 l-Autoklaven gelegt und der Autoklav auf 16 mbar evakuiert. Dann wurden jeweils 2 ml eines der beiden Niedrigsieder in den Autoklaven eingespritzt. Der Druckanstieg betrug in beiden Fällen 9,331 mbar. Nach Druckausgleich wurde der Prüfling aus dem Autoklaven herausgenommen, in die Kammer des IR-Gasanalysators gelegt und die Leckrate durch Messen der Strahlungsabsorption quantitativ ermittelt. In Abwandlung dieser Arbeitsweise wurden die Prüflinge anschließend mit Perfluor-2-methylpentan im Volumen-Verhältnis 1:100 (bezogen auf das Innenvolumen des Hohlkörpers) gefüllt und ohne vorherige Evakuierung im Autoklaven in die Testkammer des IR-Gasanalysators gelegt.
Temperatur in der Kammer des Gasanalysators: 150 °C
Testzeit im Gasanalysator: 5 Sekunden
Die beiden Niedrigsieder wurden vor der Messung im Gasanalysator kalibriert.

| | |
|---|---|
| Eichwert für 1 µl Perfluor-2-methylpentan:<br>Eichwert für 1 µl Perfluorhexangemisch: | 1200 ± 100<br>1733 ± 100 |

Die Ergebnisse sind in Tabelle 6 dargestellt. Die Leckraten waren bei Verwendung des Perfluorhexangemischs um den Faktor 1,2 bis 1,5 höher als mit Perfluor-2-methylpentan, dessen Meßgrenze demnach niedriger liegt. Bei der Kunststoff-Flasche konnte die Leckrate auch ohne vorhergehende Evakuierung im Autoklaven ermittelt werden, nicht aber beim Stahlzylinder, dessen Prüfleck für diese Bestimmung wahrscheinlich zu groß war.

Tabelle 1: Dichtheitsprüfungen von Glasflaschen mit Deckeldichtung und geschlossenem Verschluß

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Luft | 30 | >1 min | | X | | | | X |
| | 50 | >1 min | | X | | | | X |
| | 100 | >1 min | | | X | | | X |
| | 250 | >1 min | | | X | | | X |
| | 500 | >1 min | | | X | | | X |
| | 1000 | >1 min | | | X | | | X |
| Trichlor-fluormethan | 30 | - | X | | | | | |
| | 50 | - | X | | | | | |
| | 100 | - | X | | | | | |
| | 250 | - | X | | | | | |
| | 500 | - | X | | | | | |
| | 1000 | - | X | | | | | |
| Trichlortri-fluorethan | 30 | - | X | | | | | |
| | 50 | - | X | | | | | |
| | 100 | >1 min | | | X | | | X |
| | 250 | 4 s | | X | | | X | |
| | 500 | 11 s | | X | | | X | |
| | 1000 | 19 s | | X | | | X | |

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Dichlor-trifluorethan | 30 | >1 min | | | X | | | X |
| | 50 | - | X | | | | | |
| | 100 | >1 min | | | X | | | X |
| | 250 | 8 s | | X | | | X | |
| | 500 | - | X | | | | | |
| | 1000 | >1 min | | X | | | | X |
| Perfluor-2-methylpentan | 30 | 9 s | | X | | | X | |
| | 50 | 8 s | | X | | | X | |
| | 100 | >1 min | | | X | | | X |
| | 250 | 11 s | | X | | | X | |
| | 500 | - | X | | | | | |
| | 1000 | >1 min | | X | | | | X |

Tabelle 2: Dichtheitsprüfungen von Glasflaschen ohne Deckeldichtung mit geschlossenem Verschluß

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Luft | 30 | >1 min | | X | | | | X |
| | 50 | >1 min | | X | | | | X |
| | 100 | >1 min | | | X | | | X |
| | 250 | >1 min | | | X | | | X |
| | 500 | >1 min | | | X | | | X |
| | 1000 | >1 min | | | | X | | X |
| Trichlor-fluormethan | 30 | >1 min | | | | X | | X |
| | 50 | >1 min | | | | X | | X |
| | 100 | >1 min | | | | X | | X |
| | 250 | >1 min | | | | X | | X |
| | 500 | >1 min | | | | X | | X |
| | 1000 | >1 min | | | | X | | X |
| Trichlortri-fluorethan | 30 | >1 min | | X | | | | X |
| | 50 | >1 min | | | X | | | X |
| | 100 | >1 min | | | X | | | X |
| | 250 | >1 min | | | X | | | X |
| | 500 | >1 min | | | X | | | X |
| | 1000 | >1 min | | X | | | | X |

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Dichlor-trifluorethan | 30 | >1 min | | | X | | | X |
| | 50 | >1 min | | | X | | | X |
| | 100 | >1 min | | | X | | | X |
| | 250 | >1 min | | | X | | | X |
| | 500 | >1 min | | | X | | | X |
| | 1000 | >1 min | | | X | | | X |
| Perfluor-2-methylpentan | 30 | >1 min | | | | X | | X |
| | 50 | >1 min | | | | X | | X |
| | 100 | >1 min | | | | X | | X |
| | 250 | >1 min | | | | X | | X |
| | 500 | >1 min | | | | X | | X |
| | 1000 | >1 min | | | | X | | X |

Tabelle 3: Dichtheitsprüfungen von Polyethylen-Flaschen mit zugedrehtem Verschluß

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Luft | 50 | - | X | | | | | |
| | 100 | - | X | | | | | |
| | 200 | - | X | | | | | |
| | 500 | - | X | | | | | |
| | 1000 | - | X | | | | | |
| Trichlor-fluormethan | 50 | - | X | | | | | |
| | 100 | - | X | | | | | |
| | 200 | - | X | | | | | |
| | 500 | - | X | | | | | |
| | 1000 | - | X | | | | | |
| Trichlortri-fluorethan | 50 | - | X | | | | | |
| | 100 | - | X | | | | | |
| | 200 | 4 s | | X | | | X | |
| | 500 | - | X | | | | | |
| | 1000 | 5 s | | X | | | X | |
| Dichlor-trifluorethan | 50 | - | X | | | | | |
| | 100 | - | X | | | | | |
| | 200 | - | X | | | | | |
| | 500 | - | X | | | | | |
| | 1000 | 14 s | | X | | | X | |

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Perfluor-2-methylpentan | 50 | - | X | | | | | |
| | 100 | - | X | | | | | |
| | 200 | 5 s | | X | | | X | |
| | 500 | - | X | | | | | |
| | 1000 | 12 s | | X | | | X | |

Tabelle 4: Dichtheitsprüfungen von Polyethylen-Flaschen mit leicht aufgedrehtem Verschluß

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Luft | 50 | 5 s | | X | | | X | |
| | 100 | 3 s | | X | | | X | |
| | 200 | 6 s | | X | | | X | |
| | 500 | 5 s | | X | | | X | |
| | 1000 | 11 s | | X | | | X | |
| Trichlor-fluormethan | 50 | 4 s | | X | | | X | |
| | 100 | 2 s | | X | | | X | |
| | 200 | 4 s | | X | | | X | |
| | 500 | 6 s | | X | | | X | |
| | 1000 | 5 s | | X | | | X | |
| Trichlortri-fluorethan | 50 | - | X | | | | | |
| | 100 | - | X | | | | | |
| | 200 | 6 s | | X | | | X | |
| | 500 | - | X | | | | | |
| | 1000 | - | X | | | | | |
| Dichlor-trifluorethan | 50 | - | X | | | | | |
| | 100 | - | X | | | | | |
| | 200 | 5 s | | X | | | X | |
| | 500 | - | X | | | | | |
| | 1000 | >1 min | | X | | | | X |

| Gas oder Niedrigsieder | Flaschen-volumen in ml | Dauer | Blasenbildung | | | | | |
|---|---|---|---|---|---|---|---|---|
| | | | keine Blasen | wenig Blasen | viel Blasen | sprudelnd | vereinzelt | laufend |
| Perfluor-2-methylpentan | 50 | 5 s | | X | | | X | |
| | 100 | - | X | | | | | |
| | 200 | 2 s | | X | | | X | |
| | 500 | 2 s | | X | | | X | |
| | 1000 | 3 s | | X | | | X | |

Tabelle 5: Dichtheitsprüfungen von Flaschen und Stahlzylindern

| Hostinert | Luft | Perfluor-2-methylpentan | Prüfling | Beginn | Dauer | Blasenbildung | | | | |
|---|---|---|---|---|---|---|---|---|---|---|
| | | | | | | wenige Blasen | viele Blasen | vereinzelt | laufend | sprudelnd |
| 175 | X | | Glasflasche | nach 2 s | 5 s | X | | X | | |
| | X | | Kunststoff-flasche | nach 5 s | 4 s | X | | X | | |
| | X | | Stahlzylinder | nach 6 s | >1 min | X | | X | | |
| | | X | Glasflasche | nach 2 s | 5 s | X | | X | | |
| | | X | Kunststoff-flasche | nach 2 s | 3 s | X | | X | | |
| | | X | Stahlzylinder | nach 1 s | >4 s | X | | X | | |

| Hostinert | Luft | Perfluor-2-methylpentan | Prüfling | Beginn | Dauer | Blasenbildung | | | | |
|---|---|---|---|---|---|---|---|---|---|---|
| | | | | | | wenige Blasen | viele Blasen | vereinzelt | laufend | sprudelnd |
| 216 | X | | Glasflasche | sofort | >1 min | X | | | X | |
| | X | | Kunststoff-flasche | nach 2 s | 35 s | X | | X | | |
| | X | | Stahlzylinder | nach 4 s | >1 min | X | | X | X | |
| | | X | Glasflasche | nach 2 s | 9 s | X | | X | | |
| | | X | Kunststoff-flasche | nach 2 s | 4 s | X | | | | |
| | | X | Stahlzylinder | sofort | >1 min | | X | | X | X |

| Hostinert | Luft | Perfluor-2-methylpentan | Prüfling | Beginn | Dauer | Blasenbildung | | | | |
|---|---|---|---|---|---|---|---|---|---|---|
| | | | | | | wenige Blasen | viele Blasen | vereinzelt | laufend | sprudelnd |
| 272 | X | | Glasflasche | nach 2 s | >1 min | X | | X | | |
| | X | | Kunststoff-flasche | nach 1 s | 30 s | X | | X | | |
| | X | | Stahlzylinder | nach 1 s | >1 min | X | | | X | |
| | | X | Glasflasche | nach 1 s | 20 s | X | | X | | |
| | | X | Kunststoff-flasche | nach 2 s | 15 s | X | | X | | |
| | | X | Stahlzylinder | sofort | >1 min | X | | | X | |

Tabelle 6: Dichtheitsprüfungen von Polyethylen-Flaschen und Stahlzylindern in einem IR-Gasanalysator

| Niedrigsieder | Prüfling | Vorhergehende Evakuierung | | Leckrate ml/s |
|---|---|---|---|---|
| | | mit | ohne | |
| Perfluorhexangemisch | Kunststoffflasche | X | | $1,6 \cdot 10^{-4}$ |
| Perfluor-2-methylpentan | Kunststoffflasche | X | | $1,1 \cdot 10^{-4}$ |
| Perfluor-2-methylpentan | Kunststoffflasche | | X | $1,1 \cdot 10^{-4}$ |
| Perfluorhexangemisch | Stahlzylinder | X | | $4,7 \cdot 10^{-4}$ |
| Perfluor-2-methylpentan | Stahlzylinder | X | | $4,1 \cdot 10^{-4}$ |
| Perfluor-2-methylpentan | Stahlzylinder | | X | nicht meßbar |

## Patentansprüche

1. Verfahren zur Prüfung der Dichtheit von verschließbaren Hohlkörpern in einem eine Badflüssigkeit enthaltenden Gefäß, bestehend aus folgenden Schritten
   a) Befüllen des Hohlkörpers mit einer niedrigsiedenden Substanz und dann Verschließen,
   b) Eintauchen des befüllten Hohlkörpers in die Badflüssigkeit, die eine höhere Temperatur hat als der Hohlkörper,
   c) Beobachten, ob aus undichten Stellen des Hohlkörpers Blasen austreten,

   wobei die in den Hohlkörper eingefüllte Substanz einen niedrigeren Siedepunkt hat als die Badflüssigkeit, dadurch gekennzeichnet, daß man als Badflüssigkeit einen Perfluorpolyether, ein perfluoriertes tertiäres Amin oder einen perfluorierten Aminoether verwendet.

2. Verfahren zur Prüfung der Dichtheit von verschlossenen Hohlkörpern, außer elektronischen Bauteilen, in

einem eine Badflüssigkeit enthaltenden Gefäß, bestehend aus folgenden Schritten

a) Beaufschlagen des Hohlkörpers mit einer niedrigsiedenden Substanz in einer Vakuum- oder Druckkammer,

b) Eintauchen des Hohlkörpers in die Badflüssigkeit, die eine höhere Temperatur hat als der Hohlkörper,

c) Beobachten, ob aus undichten Stellen des Hohlkörpers Blasen austreten,

wobei die zur Beaufschlagung des Hohlkörpers verwendete Substanz einen niedrigeren Siedepunkt hat als die Badflüssigkeit, dadurch gekennzeichnet, daß man als Badflüssigkeit einen Perfluorpolyether, ein perfluoriertes tertiäres Amin oder einen perfluorierten Aminoether verwendet.

**3.** Verfahren zur quantitativen Prüfung der Dichtheit von verschließbaren Hohlkörpern, bestehend aus folgenden Schritten

a) Befüllen des Hohlkörpers mit einer niedrigsiedenden Substanz und dann Verschließen,

b) Erwärmung des Hohlkörpers in einer Testkammer,

c) Ermittlung der Leckrate der niedrigsiedenden Substanz mit einem Detektor,

dadurch gekennzeichnet, daß man als niedrigsiedende Substanz ein ganz oder teilweise chloriertes und/oder fluoriertes Alkan mit 1 bis 3 C-Atomen, ein ganz oder teilweise fluoriertes Alkan mit 4 bis 6 C-Atomen oder ein ganz oder teilweise fluoriertes Alken mit 2 bis 6 C-Atomen verwendet.

**4.** Verfahren zur quantitativen Prüfung der Dichtheit von verschlossenen Hohlkörpern, außer elektronischen Bauteilen, bestehend aus folgenden Schritten

a) Beaufschlagen des Hohlkörpers mit einer niedrigsiedenden Substanz in einer Vakuum- oder Druckkammer,

b) Erwärmung des Hohlkörpers in einer Testkammer,

c) Ermittlung der Leckrate der niedrigsiedenden Substanz mit einem Detektor,

dadurch gekennzeichnet, daß man als niedrig siedende Substanz ein ganz oder teilweise chloriertes und/oder fluoriertes Alkan mit 1 bis 3 C-Atomen, ein ganz oder teilweise fluoriertes Alkan mit 4 bis 6 C-Atomen oder ein ganz oder teilweise fluoriertes Alken mit 2 bis 6 C-Atomen verwendet.

**5.** Verfahren nach Anspruch 1 oder 2, dadurch gekennzeichnet, daß man als niedrigsiedende Substanz zum Befüllen der Hohlkörper ein ganz oder teilweise chloriertes und/oder fluoriertes Alkan mit 1 bis 3 C-Atomen, ein ganz oder teilweise fluoriertes Alkan mit 4 bis 6 C-Atomen oder ein ganz oder teilweise fluoriertes Alken mit 2 bis 6 C-Atomen verwendet.

**6.** Verfahren nach Anspruch 1 oder 2, dadurch gekennzeichnet, daß man als Badflüssigkeit Perfluorpolyether der Formel (I)

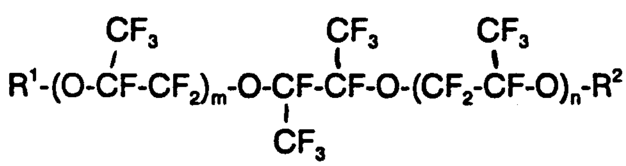

(I)

worin bedeuten:

$R^1$, $R^2$ gleich oder voneinander verschieden F oder $C_aF_{2a+1}$, wobei a eine ganze Zahl von 1 bis 10 ist und

m, n ganze Zahlen von 0 bis 12 mit $1 \leq n+m \leq 15$ sind,

oder

Perfluorpolyether der Formel (II)

$R^3$-O-(A)-(B)-(C)-$R^4$ (II)

worin bedeuten:

$R^3$, $R^4$ gleich oder voneinander verschieden $C_bF_{2b+1}$, wobei b eine ganze Zahl von 1 bis 4 ist,

(A), (B) und (C) verschieden voneinander eine Gruppe der Formel

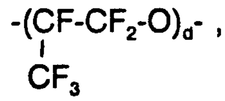

$-(C_2F_4-O)_e-$ oder

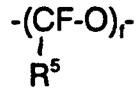

mit
$R^5$ = F oder $CF_3$,
d eine ganze Zahl von 1 bis 7 und
e, f gleich oder voneinander verschieden eine ganze Zahl von 0 bis 7, einsetzt.

7. Verfahren nach Anspruch 1 oder 2, dadurch gekennzeichnet, daß man als Badflüssigkeit perfluorierte Amine der Formel $R^6R^7R^8N$ einsetzt, worin $R^6$ bis $R^8$ gleich oder voneinander verschieden eine Gruppe der Formel $C_gF_{2g+1}$ bedeuten, wobei g eine ganze Zahl von 1 bis 14 ist.

8. Verfahren nach Anspruch 1 oder 2, dadurch gekennzeichnet, daß man als Badflüssigkeit Perfluoraminoether der Formel

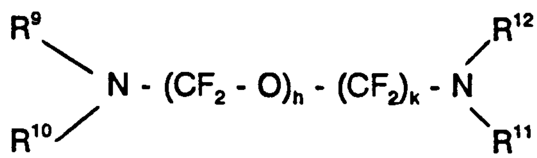

einsetzt, worin bedeuten:

$R^9$ bis $R^{12}$ gleich oder voneinander verschieden eine Gruppe der Formel $C_gF_{2g+1}$ , wobei g eine ganze Zahl von 1 bis 14 ist,

h, k gleich oder voneinander verschieden eine ganze Zahl von 1 bis 6.

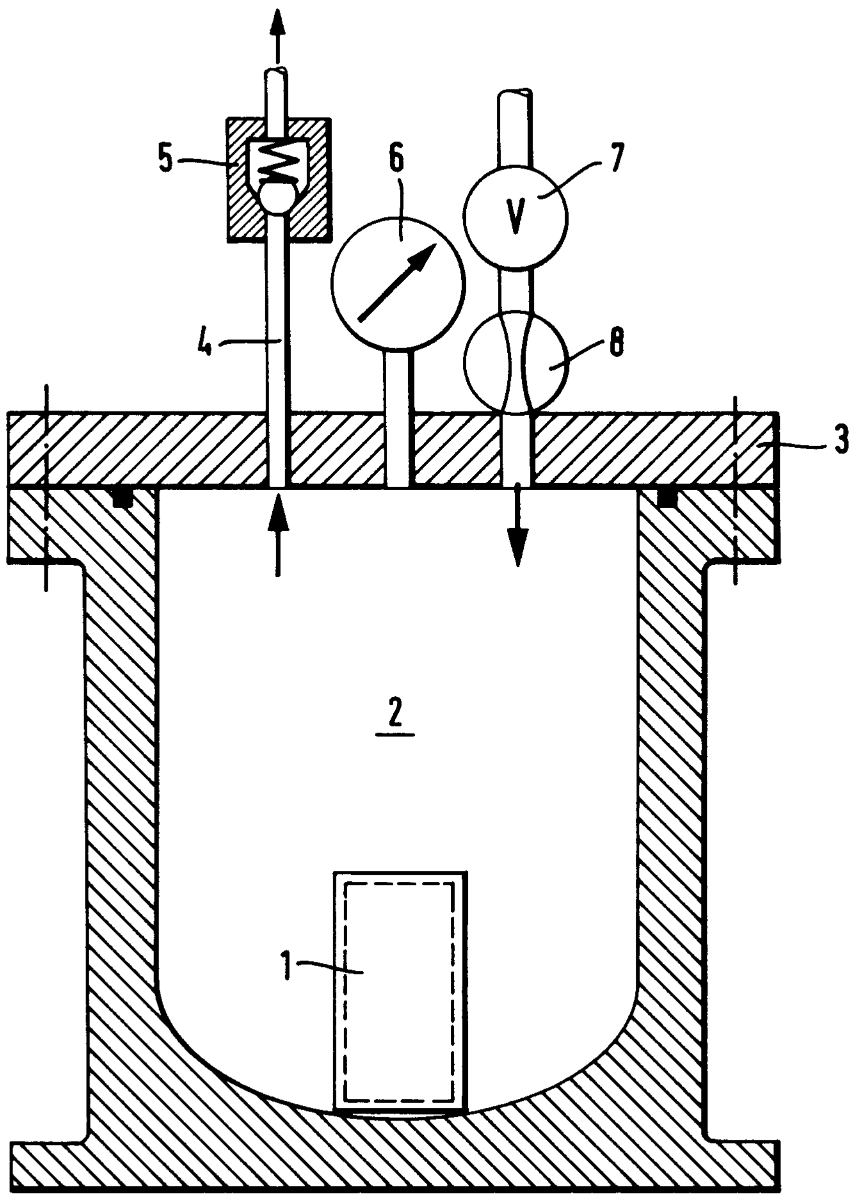


Fig. 1

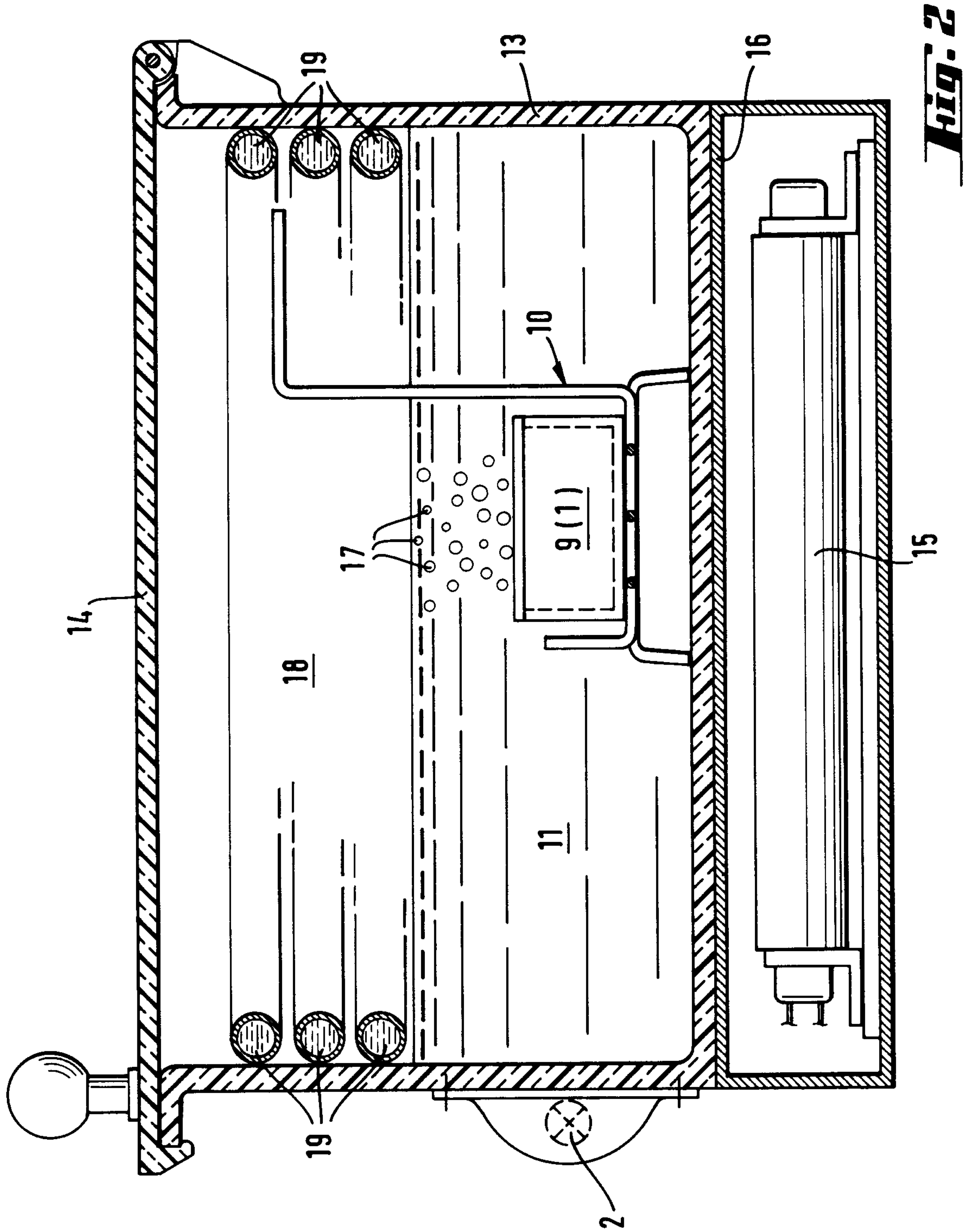


Fig. 2

Europäisches Patentamt

# EUROPÄISCHER RECHERCHENBERICHT

Nummer der Anmeldung

EP 92110699.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| Y | EP - A - 0 390 232 (WUBS) * Zusammenfassung; Fig. 1 * -- | 1,3 | G 01 M 3/10<br>G 01 M 3/20 |
| X | EP - A - 0 203 348 (MONTEDISON) * Gesamt * | 2,4 | |
| Y | -- | 1,3 | |
| X | US - A - 3 548 636 (LITANT) * Gesamt * -- | 2,4 | |
| A | PATENT ABSTRACTS OF JAPAN, unexamined applications, P Field, Band 6, Nr. 129, 15. Juli 1982 THE PATENT OFFICE JAPANESE GOVERNMENT Seite 88 P 128 * Kokai-no. 57-54 832 (HITACHI SEISAKUSHO) * -- | 1-4 | |
| | | | **RECHERCHIERTE SACHGEBIETE (Int. Cl 5)** |
| A | US - A - 4 896 529 (TONELLI) * Gesamt * -- | 1-4 | G 01 M |
| A | US - A - 4 218 914 (HORIMOTO) * Gesamt * -- | 1-4 | |
| A | GB - A - 2 177 514 (ISC CHEMICALS) * Gesamt * ---- | 1-4 | |

Der vorliegende Recherchenbericht wurde für alle Patentansprüche erstellt.

| Recherchenort | Abschlußdatum der Recherche | Prüfer |
|---|---|---|
| WIEN | 08-10-1992 | NARDAI |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82